(19) Europäisches Patentamt
European Patent Office
Office européen des brevets

(11) Numéro de publication: **0 115 291**
**B1**

(12) **FASCICULE DE BREVET EUROPEEN**

(45) Date de publication du fascicule du brevet: **01.04.87**

(51) Int. Cl.⁴: **G 07 C 3/00**, F 01 D 21/00

(21) Numéro de dépôt: **84100436.9**

(22) Date de dépôt: **17.01.84**

(54) **Système de surveillance de l'endommagement en torsion d'une ligne d'arbres composée d'une machine entraînante et d'une machine entraînée.**

(30) Priorité: **20.01.83 FR 8300843**

(43) Date de publication de la demande: **08.08.84 Bulletin 84/32**

(45) Mention de la délivrance du brevet: **01.04.87 Bulletin 87/14**

(84) Etats contractants désignés: **AT BE CH DE FR GB IT LI LU NL SE**

(56) Documents cités:
**DE - B - 2 736 454**
**FR - A - 2 326 745**
**US - A - 4 051 427**
**US - A - 4 272 992**

**PROCEEDINGS OF THE AMERICAN POWER CONFERENCE, vol. 41, 1979, pages 1163-1169, USA J.D. HURLEY et al.: *"Torsional monitor equipment for turbine-generator units"***
**IEEE TRANSACTIONS ON POWER APPARATUS AND SYSTEMS, vol. PAS-99, no. 2, mars/avril 1980, pages 703-710 J. STEIN et al.: *"The torsional stress analyzer for continuously monitoring turbine-generators"***
**MOTORTECHNISCHE ZEITSCHRIFT, vol. 26, no. 9, septembre 1969, page 391 *"Ein neues digitales Drehmoment-Messgerät"***
**ENGINEERING, vol. 196, no. 2, 5 juillet 1963, page 5072 *"Maximum efficiency in ships' propulsion"***

(73) Titulaire: **ALSTHOM, 38, avenue Kléber, F-75784 Paris Cédex 16 (FR)**

(72) Inventeur: **Bray, Jean-Claude, 14, rue La Fontaine, F-90000 Belfort (FR)**

(74) Mandataire: **Weinmiller, Jürgen et al, Lennéstrasse 9 Postfach 24, D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

**Description**

La présente invention a trait à un système de surveillance de l'endommagement en torsion d'une ligne d'arbres composée d'une machine entraînante et d'une machine entraînée, ladite machine entraînante étant commandée par un servomoteur dont la course règle l'alimentation de la machine entraînante, ledit système comprenant un premier et un second dispositif fournissant des signaux $V_H$ et $V_J$ représentatifs des vitesses de rotation en deux points éloignées H et J de la ligne d'arbres, un troisième dispositif déterminant les paramètres du couple résistant, des moyens utilisant les signaux fournis par les premier, second et troisième dispositifs pour déterminer les valeurs de contraintes en diverses zones M de la ligne d'arbres, des moyens permettant de déterminer à partir desdites valeurs de contraintes l'endommagement du métal dans lesdites zones M.

Les endommagements sont causés par des perturbations et étant donné qu'ils s'ajoutent, ils est indispensable de suivre l'état des endommagements des diverses zones.

Un tel système est décrit dans l'article «Torsional monitor equipment for turbo-generator units» paru dans la revue américaine «Proceedings of the American Power Conference», 1979, vol 41, p. 1163 à 1169. Ce système comporte un dispositif de mesure du couple résistant comprenant un transformateur de courant et un transformateur de tension fournissant leurs signaux de sortie à un calculateur analogique.

Or, ces transformateurs spéciaux sont coûteux car ils doivent laisser passer des courants très élevés sans distorsion et, par ailleurs, isl fournissent des mesures imprécises étant donné qu'ils ne peuvent tenir compte des phénomènes non linéaires entre rotor et stator de l'alternateur.

Le sysème de surveillance selon l'invention permettant d'obtenir un résultat plus précis avec des moyens moins coûteux est caractérisé en ce que le troisième dispositif déterminant les paramètres du coupe résistant comporte:

- des premiers moyens fournissant à partir des signaux $V_H$ et $V_J$ un signal $\Delta\varnothing_T(t)$ représentatif de l'angle de torsion entre les points H et J,
- des deuxièmes moyens alimentés par le signal $\Delta\varnothing_T(t)$ et par un signal

$$\frac{dL(t)}{dt}$$

qui est la dérivée d'un signal L (t) proportionnel à la course du servomoteur et fournissant un signal représentatif de la partie de l'angle de torsion $\Delta\varnothing_m(t)$ due au couple moteur,
- des troisièmes moyens servant à faire la différence entre le signal $\Delta\varnothing_T(t)$ et le signal $\Delta\varnothing_m(t)$ pour fournier un signal $\Delta\varnothing(t)$ représentatif de la partie de l'angle de torsion due au couple résistant,
- des quatrièmes moyens fournissant à partir du signal $\Delta\varnothing(t)$ les paramètres du couple résistant,
- un premier dispositif à seuil alimenté par le signal

$$\frac{d\Delta\varnothing_T(t)}{dt}$$

qui déclenche les deuxièmes moyens lorsque ce signal dépasse un seuil détermine,
- un second dispositif à seuil alimenté par le signal

$$\frac{dL(t)}{dt}$$

déclenche les deuxièmes moyens lorsque ce signal dépasse un seuil déterminé.

L'invention va être décrite plus en détail en se référant à un mode de réalisation particulier cité à titre d'exemple et illustré sur les dessins annexés.

La fig. 1 représente la ligne d'arbres munie des premiers moyens fournissant le signal $\Delta\varnothing_T(t)$ représentatif de l'angle de torsion entre les points H et J.

La fig. 2 représente les moyens fournissant un signal $\Delta\varnothing_m(t)$ représentatif de la partie de l'angle de torsion due au couple moteur et un signal $\Delta\varnothing(t)$ représentatif de la partie de l'angle de torsion due au résistant.

La fig. 3 représente les moyens permettant de calculer des paramètres représentatifs du couple résistant.

La fig. 4 représente les moyens servant à calculer les contraintes de torsion dans une zone M du rotor.

La fig. 5 représente les cinquièmes moyens permettant de calculer l'endommagement du rotor dans la zone considérée M.

Les fig. 6 à 23 représentent des blocs de la première division 27 des moyens de la figure 3.

Les fig. 24 à 34 représentent les blocs de la seconde division des moyens de la figure 3.

Les fig. 35 à 39 représentent des blocs des moyens de la fig. 4.

Sur la figure 1 on a représenté schématiquement une ligne d'arbres de turboalternateur qui comporte un alternateur 1, une turbine 2 comprenant une partie haute pression (H.P.) 3, une partie moyenne pression (M.P.) 4 et deux parties basse pression (B.P.) 5 et 6.

La partie H.P. de tête 3 est alimentée en fluide sous pression à travers une vanne réglable actionnée par un servomoteur 7 dont la course en fonction de temps sera indiquée par L(t).

Devant la partie H.P. 3 au point H, on a disposé un premier détecteur de vitesse instantanée 8 et derrière l'alternateur 2 au point J un second détecteur de vitesse instantanée 9.

Ces détecteurs 8 et 9 fournissent des signaux de sortie qui sont appliqués à un décodeur 10 qui fournit un signal $\Delta\varnothing_T(t)$ représentant l'angle de torsion instantané entre les points H et J et les signaux $\Delta\varnothing'_T(t)$ et $\Delta\varnothing''_T(t)$ représentatifs l'un des écarts de vitesse entre H et J et l'autre des écarts d'accélération.

Sur la figure 2 on a représenté des deuxièmes moyens 11 qui fournissent un signal $\Delta\varnothing^m(t)$ représentant la variation d'angle entre H et J due au couple moteur et des troisièmes moyens 12 qui fournissent le signal $\Delta\varnothing(t)$ représentant la variation d'angle entre H et J due au couple résistant.

Sur la figure 2 est également représenté un premier dispositif à seuil 14 qui est alimenté par le signal

$$\frac{d\Delta\varnothing^T(t)}{dt}$$

issu d'un dérivateur 14' alimenté par $\Delta\varnothing_T(t)$. Lorsque ce signal dépasse un seuil déterminé le dispositif 14 active un commutateur 15 qui active w blocs Mi (avec $1 \leqslant i \leqslant w$) pour qu'ils calculent les $\alpha_{im}(0)$, w étant le nombre de formes propres de la ligne d'arbre prise en compte dans le système par exemple une dizaine. Les blocs Mi font partie ainsi que le commutateur 15 des deuxièmes moyens 11.

Les blocs Mi reçoivent $\Delta\varnothing_T(t)$ en permanence mais n'utilisent que $\Delta\varnothing_T(0)$, l'instant 0 étant celui de l'activation du commutateur 15. Il y a une relation linéaire déterminée entre $C^r_m(0)$ et $\Delta\varnothing_T(0)$ les coefficients de cette relation étant enregistrés dans les blocs Mi.

La formule de $\alpha_{im}(0)$ est la suivante:

$$\alpha_{im}(O) = \sum_r C^r_m(O)\, \beta^r_i$$

avec

$$\beta^r_i = \frac{\Delta\varnothing}{\omega^{\bullet}_i I_T}\int_{lr} \frac{\varnothing_i(z)dz}{lr}$$

Cu: Couple de référence

$I_T$: Moment massique de torsion calculé sur la ligne d'arbres complète

r: Indice du rotor moteur considéré

$l_r$: longueur active du rotor r

$\varnothing_i(z)$: Forme propre d'indice i

z: ordonné du point considéré sur la ligne d'arbres comptée à partir du point H

$\Delta\varnothing_i$: écart angulaire calculé entre les points H et J pour la forme propre i

$C^r_m(0)$: Couple moteur existant sur le rotor r avant l'instant to auquel le dispositif de seuil 14 active les mémoires Mi. Ce couple est donné une fois pour toute en fonction de la valeur du $\Delta\varnothing_T(0)$ permanent entre les deux pistes de mesure. Ce couple est rapporté au couple de référence Cu.

$\omega^{\bullet}_i = \omega_i\sqrt{1-\nu_i^2}$:

avec $\omega_i$ pulsation d'ordre i en conservatif et $\nu_i$ amortissement de Lehr correspondant à la forme propre i et déterminé expérimentalement.

$\nu_i$ comprend l'amortissement dû au fluide moteur.

Sur la figure 2 on a représenté un second dispositif à seuil 16 alimenté par le signal

$$\frac{dL(t)}{dt}$$

issu d'un dérivateur 17 recevant sur son entrée le signal L(t) représentatif de la course de servomoteur 7.

Les deuxième moyens 11 comportent un commutateur 18 et un commutateur 18' qui sont activés par le dispositif à seuil 16 lorsque le signal

$$\frac{dL(t)}{dt}$$

dépasse un seuil prédéterminé. L'instant auquel

$$\frac{dL(t)}{dt}$$

dépasse le seuil est indiqué par $t_1$, un certain temps après $t_1$ le servomoteur est arrêté et l'instant d'arrêt du servomoteur est indiqué par $t_2$; la levée du servomoteur à l'instant $t_2$ est indiquée par $L_2$, l'instant 0 étant comme il a été précisé plus haut l'instant auquel

$$\frac{d\Delta\varnothing_T(t)}{dt}$$

dépasse le seuil prédéterminé.

Le commutateur 18 active w groupes 19 de générateur de fonction faisant partie des deuxièmes moyens 11.

Chaque groupe 19 comporte les générateurs de fonctions $g_{i1}(t)$, $g_{i2}(t)$ et $g_{i3}(t)$. Les deuxièmes moyens comportent également w blocs 20 générant une fonction fim (t). Chacun des blocs 20 est alimenté par le groupe 19 de générateurs de fonctions associé et par le signal

$$\frac{dL(t)}{dt}$$

obtenu à la sortie du dérivateur 17.

Le signal

$$\frac{dL(t)}{dt}$$

n'est appliqué sur le bloc 20 que lorsque le commutateur 18' est activé.

$$\text{avec } g_{i1}(\bar{t}) = \frac{\omega^{\bullet}_i \bar{t}}{\omega^{\bullet 2}_i + n_i^2} - \frac{2\omega^{\bullet}_i n_i}{(\omega^{\bullet 2}_i + n_i^2)^2}$$

$$+ \frac{(n_i^2 - \omega_i^{*2})^2 \sin \omega_i^* \bar{t} + 2\, n_i\, \omega_i^* \cos \omega_i^* \bar{t}}{(\omega_i^{*2} + n_i^2)^2} \cdot e^{-n_i \bar{t}}$$

$$g_{i2}(\bar{t}) = \frac{\omega_i^* \bar{t}\, e^{-ko\bar{t}}}{\omega_i^{*2} + (n_i - ko)^2} - \frac{2\, \omega_i^* (n_i - ko)\, e^{-ko\bar{t}}}{\left[\omega_i^{*2} + (n_i - ko)^2\right]^2}$$

$$+ \frac{\left[(n_i - ko)^2 - \omega_i^{*2}\right] \sin \omega_i^* \bar{t} + 2(n_i - ko)\, \omega_i^* \cos \omega_i^* \bar{t}}{\left[\omega_i^{*2} + (n_i - ko)^2\right]^2} \cdot e^{-n_i \bar{t}}$$

$$g_{i3}(\bar{t}) = \frac{\omega_i^*}{\omega_i^{*2} + n_i^2} - \frac{\omega_i^*}{\omega_i^{*2} + (n_i - ko)^2} \cdot e^{-ko\bar{t}}\, e^{-ko(t_2 - t_1)}$$

$$- \frac{n_i \sin \omega_i^* \bar{t} + \omega_i^* \cos \omega_i^* \bar{t}}{\omega_i^{*2} + n_i^2} \cdot e^{-n_i \bar{t}}$$

$$+ \frac{(n_i - ko) \sin \omega_i^* \bar{t} + \omega_i^* \cos \omega_i^* \bar{t}}{\omega_i^{*2} + (n_i - ko)^2} \cdot e^{-n_i \bar{t}} \cdot e^{-ko(t_2 - t_1)}$$

$$f_{im}(t) = -\alpha_{im}(o)\, \frac{a}{L_o} \left[g_{i1}(\bar{t}) - g_{i2}(\bar{t})\right] \quad \text{si } 0 \leqslant t \leqslant t_2$$

$$= f_{im}(t_2) - {}_{im}(o)\, \left(1 - \frac{L_2}{L_o}\right) g_{i3}(\bar{t}) \quad \text{si } t \geqslant t_2$$

$$\text{avec} \quad a = \left(\frac{dL(t)}{dt}\right)_{t = o}$$

$L_o$: levée du servomoteur associée au couples $C^r_m(o)$

avec $\bar{t} = t - t_1$ dans $g_{i1}$ et $g_{i2}$

et $t = \bar{t} - t_2$ dans $g_{i3}$

$n_i$: $\omega_i \cdot v_1$

ko: constante d'amortissement des couples moteur transitoire déterminée expérimentalement

Les sorties des blocs 20 sont connectées aux entrées d'un sommateur 21 qui effectue la somme des signaux

$$\sum_i f_{im}(t)$$

pour fournier un signal $\Delta\varnothing_m(t)$ qui représente la différence d'angle de torsion entre les deux pistes H et J due au couple moteur.

A l'aide de deux différentiateurs 22 et 23, on obtient les signaux $\Delta\varnothing'_m(t)$ et $\Delta\varnothing''_m(t)$.

Les troisièmes moyens 12 comportent trois soustracteurs 24, 25, 26. Le soustracteur 24 effectue la différence entre les signaux $\Delta\varnothing_T(t)$ et $\Delta\varnothing_m(t)$ et fournit un signal $\Delta\varnothing_{(t)}$ qui représente la différence d'angle entre les deux pistes H et J représentative du couple résistant

$$\Delta\varnothing(t) = \Delta\varnothing_T(t) - \Delta\varnothing_m(t)$$

De même, grâce aux soustracteurs 25 et 26, on obtient les signaux

$$\Delta\varnothing\,(t) = \Delta\varnothing'_T(t) - \Delta\varnothing'_m(t) \text{ et}$$

$$\Delta\varnothing''(t)\,\Delta\varnothing''_T(t) - \Delta\varnothing''_m(t)$$

Les quatrièmes moyens 13 représentés à la figure 3 permettent de calculer le couple électrique en utilisant la base modale de la ligne d'arbres. Cette base modale est connue à la suite d'essais et de calculs. Dans la méthode choisie, Cr est représenté par une suite de polynomes de degré 5.

$\Sigma\gamma_k^n v^k$, avec $0 \leqslant k \leqslant 5$, v représentant le temps entre k $t_{n-1}$ et $t_n$,

le temps ayant été découpé en tranches égales u avec $t_n - t_{n-1} = u$, vn avec $o \leqslant v \leqslant u$

$v^k$ représente les puissances successives de v: 1, v, $v^2$, $v^3$, $v^4$, $v^5$.

La première division 27 des quatrièmes moyens 13 permet de discrétiser les fonctions $\Delta\varnothing(t)$, $\Delta\varnothing'(t)$, $\Delta\varnothing''(t)$ et de calculer les fonctions des caractéristiques des formes propres.

On définit une fois toutes après ajustage in situ du dispositif le pas de calcul u et les constantes suivantes pour chaque mode propre d'ordre i désignées par le bloc $C_i$, 28;

$\omega_i$, $\nu_i$, $n_i$, $p_{i1}$, $q_{i1}$

$a^u_{i1}$, $a^u_{i2}$, $c^u_{i1}$, $c^u_{i2}$, $\beta_i$

u représente comme il a été dit le pas de temps sur lequel sera valable chacune des expressions successives du couple résistant

$\omega_i$, $\nu_i$, $n_i$ ont déjà été définis

$$p_{i1} = \frac{n_i}{\omega_i^{\bullet 2} + n_i^2}$$

$$q_{i1} = \frac{\omega_i^{\bullet}}{\omega_i^{\bullet 2} + n_i^2}$$

$$a^u_{i1} = e^{-n_i u} \sin \omega_i^{\bullet} u$$

$$a^u_{i2} = e^{-n_i u} \cos \omega_i^{\bullet} u$$

$$c^u_{i1} = e^{+n_i u} \cos \omega_i^{\bullet} u$$

$$c^u_{i2} = -e^{+n_i u} \sin \omega_i^{\bullet} u$$

$$\beta_i = \Delta\phi_i \frac{Cu}{\omega_i^{\bullet} I_T} \int_{l_A} \frac{\Delta\phi_i(z)\,dz}{l_A}$$

$l_A$ étant la longueur active du rotor sur lequel s'exerce le couple résistant.

La division 27 comporte w générateurs de fonction Fi 29.

Chaque générateur de fonction Fi est constitué par dix-huit blocs (Bl) numérotés de 1 à 18.

Le bloc 1 (Bli 1) représenté à la figure 6 calcule les constantes $p_{i2}$ à $p_{i6}$ et $q_{i2}$ et $q_{i6}$ en fonction de $p_{i1}$ et $q_{i1}$ selon les formules suivantes:

$$p_{i2} = p_{i1}^2 - q_{i1}^2$$

$$p_{i3} = p_{i1}\,p_{i2} - q_{i1}\,q_{i2}$$

- - - - - - - - - - - - - - - - - - - -

$$p_{i6} = p_{i1}\,p_{i5} - q_{i1}\,q_{i5}$$

$$q_{i2} = 2\,p_{i1}\,q_{i1}$$

$$q_{i3} = q_{i1}\,p_{i2} + p_{i1}\,q_{i2}$$

- - - - - - - - - - - - - - - - - - - -

$$q_{i6} = q_{i1}\,p_{i5} + p_{i1}\,q_{i5}$$

Le bloc 2 (Bli 2) représenté à la figure 7 calcule les constantes $N_i^k$ et $h^k_{iR}$, avec les fomules suivantes, le R en indice de $h_i^k$ signifiant partie réelle, avec k entier allant de 0 à 5

$$N_i^0 = p_{i1}$$

$$N_i^1 = p_{i1}\,u - p_{i2}$$

$$N_i^2 = p_{i1}\,u^2 - 2\,p_{i2}\,u + 2!\,p_{i3}$$

- - - - - - - - - - - - - - - - - - - -

$$N_i^5 = p_{i1} - 5\,p_{i2}\,u^4 + 4.5\,p_{i3}\,u^3 - 3.4.5\,p_{i4}\,u^2 + 2.3.4.5\,p_{i5}\,u - 5!\,p_{i6}$$

u, $u^2$, $u^3$, $u^4$ et $u^5$ représentent dans ces formules et dans la suite les puissances successives du u.

$$h^k_{iR} = -(-1)^{k+1}\,k!\,p_{3,\,k+1}$$

Le bloc 3 (Bli 3) représenté à la figure 8 calcule les constantes $O_i^k$ et $h_{iJ}^k$ (le J en indice de $h_i^k$ signifiant partie imaginaire) avec des formules qui sont les mêmes que celles appliquées dans le bloc $Bl_{i2}$ dans lesquelles on remplace

$p_i\,k+1$ par $q_{i\,k+1}$

$N_i^k$ par $O_i^k$

$h_{iR}^k$ par $h_{iJ}^k$

Le bloc 4 (Bli 4) représenté à la figure 9 calcule les constantes $A_i^k$ et $B_i^k$ avec les formules suivantes:

$$A_i^k = h_{iR}^k + N_i^k\, c_{i1}^u - 0_i^k\, c_{i2}^u$$

$$B_i^k = h_{iJ}^k + N_i^k c_{i2}^u + 0_i^k c_{i1}^u$$

Le bloc 5 (Bli 5) représenté à la figure 10 calcule les constantes $L_{i1}^k$ et $L_{i12}^k$ avec les fomules suivantes

$$L_{i1}^k = A_i^k\, a_{i1}^u + B_i^k\, a_{i2}^u$$

$$L_{i2}^k = A_i^k\, a_{i2}^u + B_i^k\, a_{i1}^u$$

Le bloc 6 (Bli 6) représenté à la figure 11 calcule la fonction $l_{i1}^n$ en fonction de $l_{i1}^{n-1}$ et des coefficients $\gamma_k^{n-1}$
n est un indice que varie de 0 à ∞.

$$l_{i1}^n = l_{i1}^{n-1} + \sum_k A_i^k\, \gamma_k^{n-1}$$

avec $l_{i1}^o = 0$

Le bloc 7 (Bli 7) représenté à la figure 12 calcule la fonction $l_{i2}^n$ en appliquant la fomule suivante

$$l_{i2}^n = l_{i2}^{n-1} + \sum_k B_i^k\, \gamma_k^{n-1}$$

avec $l_{i2}^o = 0$

Le bloc 8 (Bli 8) représenté à la figure 13 calcule les constantes $a_{i1}^n$ et $a_{i2}^n$ en appliquant les formules suivantes:

$$a_{i1}^n = a_{i1}^u\, a_{i1}^{n-1} + a_{i2}^u\, a_{i1}^{n-1}$$

$$a_{i2}^n = a_{i2}^u\, a_{i1}^{n-1} - a_{i1}^u\, a_{i2}^{n-1}$$

avec $a_{i1}^o = 0$ et $a_{i2}^o = 1$

Le bloc 9 (Bli 9) représenté à la figure 14 calcule les constantes $c_{i1}^n$ et $c_{i2}^n$ en appliquant les formules suivantes:

$$c_{i1}^n = c_{i1}^u\, c_{i1}^{n-1} - c_{i2}^u\, c_{i2}^{n-1}$$

$$c_{i2}^n = c_{i1}^u\, c_{i2}^{n-1} + c_{i2}^u\, c_{i1}^{n-1}$$

avec $c_{i1}^o = 1$ et $c_{i2}^o = 0$

Le bloc 10 (Bli 10) représenté à la figure 15 calcule les constantes $a'^n_{i1}$, $a'^n_{i2}$, $a''^n_{i1}$, $a''^n_{i2}$, en appliquant les fomules suivantes:

$$a'^n_{i1} = \omega_i^* a_{i2}^n - n_i\, a_{i1}^n$$

$$a'^n_{i2} = -(\omega_i^* a_{i1}^n + n_1\, a_{i2}^n)$$

$$a''^n_{i1} = \omega_i^* a'^n_{i2} - n_i\, a'^n_{i1}$$

$$a''^n_{i2} = -(\omega_i^* a'^n_{i1} + n_i\, a'^n_{i2})$$

Le bloc 11 (Bli 11) représenté à la figure 16 calcule les fonctions $C_i^n$ et $D_i^n$ en appliquant les formules suivantes:

$$C_i^n = l_{i1}^n\, a_{i2}^n - l_{i2}^n\, a_{i1}^n$$

$$D_i^n = l_{i1}^n\, a_{i1}^n + l_{i2}^n\, a_{i2}^n$$

Le bloc 12 (Bli 12) représenté à la figure 17 calcule les fonctions $C'^n_i$ et $D'^n_i$ en appliquant les formules du bloc Bli 11 dans lesquelles on a remplacé

$C_i^n$ par $C'^n_i$

$D_i^n$ par $D'^n_i$

$a_{i1}^n$ par $a'^n_{i1}$

$a_{i2}^n$ par $a'^n_{i2}$

Le bloc 13 (Bli 13) représenté à la figure 18 calcule les fonctions $D''^n_i$ et $D''^n_i$ en appliquant les formules du bloc Bli 11 dans lesquelles on a remplacé

$C_i^n$ par $C''^n_i$

$D_i^n$ par $D''^n_i$

$a_{i1}^n$ par $a''^n_{i1}$

$a_{i2}^n$ par $a''^n_{i2}$

Le bloc 14 (Bli 14) représenté à la figure 19 calcule les constantes $A_i^n$ et $B_i^n$ en appliquant les formules suivantes:

$$A_i^n = c_{i1}^n\, a_{i1}^n + c_{i2}^n\, a_{i2}^n$$

$$B_i^n = c_{i1}^n\, a_{i2}^n - c_{i2}^n\, a_{i1}^n$$

Le bloc 15 (Bli 15) représenté à la figure 20 calcule les fonctions $P_{ik}^n$ selon la formule suivante:

$$P_{ik}^n = \beta_i\,(A_i^n\, L_{i2}^k + B_i^n\, L_{i1}^k)$$

Le bloc 16 (Bli 16) représenté à la figure 21 calcule les fonctions $Q_{ik}^n$ selon la formule suivante:

$$Q_{ik}^n = \beta_i\,(a'^n_{i1}\, L_{i2}^k + a'^n_{i2}\, L_{i1}^k)$$

Le bloc 17 (Bli 17) représenté à la figure 22 calcule les fonctions $R_{ik}^n$ selon la formule suivante:

$$R_{ik}^n = \beta_i (a''^n_{i1} L^k_{i2} + a''^n_{i2} L^k_{i1} + \omega_i^* u^k)$$

Le bloc 18 (Bli 18) représenté à la figure 23 calcule les fonctions $E_i^{1n}$ $E_i^{2n}$ et $E_i^{3n}$ selon les formules suivantes:

$$E_i^{1n} = \beta_i (a^u_{i1} C_i^n + a^u_{i2} D_i^n)$$

$$E_i^{2n} = \beta_i (a^u_{i1} C'^n_i + a^u_{i2} D'^n_i)$$

$$E_i^{3n} = \beta_i (a^u_{i1} C''^n_i + a^u_{i2} D''^n_i)$$

La division 27 est alimentée par les signaux $\gamma_o^{n-1}$, $\gamma_1^{n-1}$, $\gamma_2^{n-1}$ ... $\gamma_5^{n-1}$ représentatifs du couple résistant pendant l'intervalle de temps n (entre $t_{n-1}$ et $t_n$).

Par ailleurs, la division 27 comporte des moyens alimentés par les fonctions $\Delta\varnothing(t)$, $\Delta\varnothing'(t)$ et $\Delta\varnothing_n''(t)$ qui fournissent des suites de valeurs discrètes $\Delta\varnothing^n(t)$, $\Delta\varnothing'(t)$, $\Delta\varnothing_n^n(t)$ représentatives de ces fonctions à l'instant $t_n$,

avec $\Delta\varnothing^n(t) = \Delta\varnothing(t_n)$, $\Delta\varnothing'^n(t) = \Delta\varnothing'(t_n)$

et $\Delta\varnothing_n^n(t) = \Delta\varnothing''(t_n)$.

La division 27′ alimentée par la division 27 ainsi que par les signaux $\gamma_0^{n-1}$, $\gamma_1^{n-1}$, $\gamma_2^{n-1}$ ... $\gamma_5^{n-1}$ représentatifs du couple électrique pendant l'intervalle n−1 permet de calculer les signaux $\gamma_{0}^n$, ${}_1^n$, ${}_2^n$ ... $\gamma_5^n$ représentatifs du couple résistant pendant l'intervalle n.

La division 27′ comporte 11 blocs numérotés de (Bl′1 à Bl′11). Le bloc Bl′1 représenté à la figure 24 est alimenté par les w signaux $E_i^{1n-1}$ et par le signal $\Delta\varnothing^{n+1}$ et fournit un signal $E_i^n$ selon la formule suivante:

$$E_1^n = \Delta \phi^{n+1} - \sum_i E_i^{1,\ n-1}$$

Le bloc Bl′2 (figure 25) fournit le signal $E_2^n$ répondant à la formule

$$E_2^n = \Delta \phi'^{n+1} - \sum_i E_i^{2,\ n-1}$$

et le bloc Bl′3 (figure 26) fournit le signal $E_3^n$ répondant à la formule

$$E_3^n = \Delta \phi''^{n+1} - \sum_i E_i^{3,\ n-1}$$

Le bloc Bl′4 (figure 27) fournit les signaux $P_k^n$

$$P_k^n = \sum_i P_{ik}^n \quad \text{avec } 0 \leqslant k \leqslant 5$$

Le bloc Bl′5 (figure 28) fournit les signaux

$$Q_k^n = \sum_i Q_{ik}^n$$

et le bloc Bl′6 (figure 29) fournit les signaux

$$R_k^n = \sum_i R_{ik}^n$$

Le bloc Bl′7 (figure 30) calcule les signaux $\gamma_o^n$, $\gamma_1^n$ et $\gamma_2^n$ à partir des formules suivantes:

$$\gamma_o^n = \gamma_o^{n-1} + u\,\gamma_1^{n-1} + u^2\gamma_2^{n-1} + u^3\gamma_3^{n-1} + u^4\gamma_4^{n-1} + u^5\gamma_4^{n-1}$$

$$\gamma_1^n = \gamma_1^{n-1} + 2u\,\gamma_2^{n-1} + 3u^2\gamma_3^{n-1} + 4u^3\gamma_4^{n-1} + 5u^4\gamma_5^{n-1}$$

$$\gamma_2^n = \gamma_2^{n-1} + 3u\,\gamma_3^{n-1} + 6\,u^2\gamma_4^{n-1} + 10u^3\gamma_5^{n-1}$$

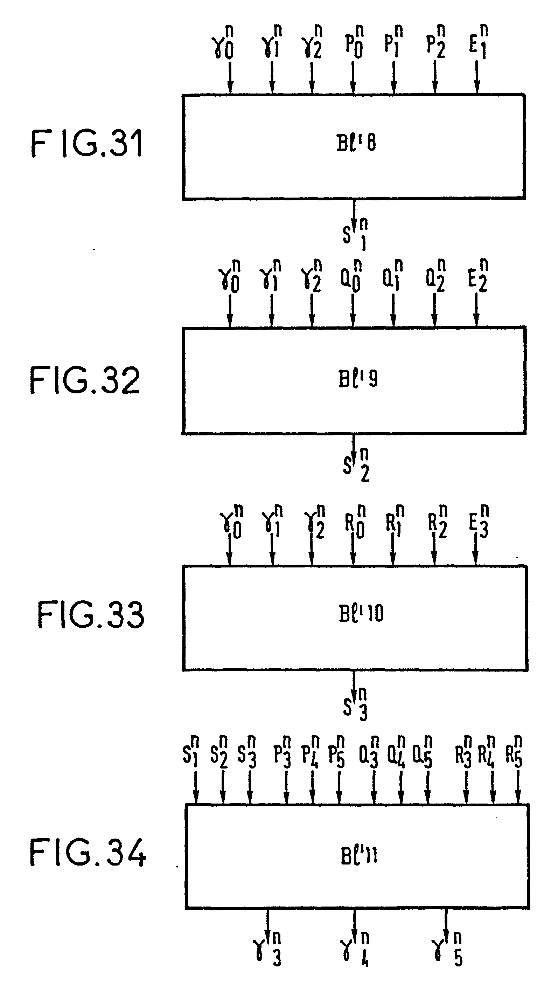

Le bloc Bl′8 (figure 31) calcule le signal $S_1^n$ à partir de la formule suivante:

$$S_1^n = E_1^n - P_o^n\ \gamma_o^n - P_1^n\ \gamma_1^n - P_2^n\gamma_2^n$$

Le bloc Bl′9 (figure 32) calcule le signal $S_2^n$ à partir de la formule suivante:

$$S_2^n = E_2^n - Q_o^n\ \gamma_o^n - Q_1^n\gamma_1^n - Q_2^n\ \gamma_2^n$$

Le bloc Bl′10 (figure 33) calcule le signal $S_3^n$ à partir de la formule suivante:

$$S_3^n = E_3^n - R_o^n\ \gamma_o^n - R_1^n\gamma_1^n - R_2^n\ \gamma_2^n$$

Le bloc Bl′11 (figure 34) calcule les signaux $\gamma_3^n$, $\gamma_4^n$ et $\gamma_5^n$ selon formules suivantes:

$$\gamma_3^n = \frac{S_1^n\ (Q_4^n R_5^n - R_4^n Q_5^n) + S_2^n\ (R_4^n P_5^n - P_4^n R_5^n) + S_3^n\ (P_4^n Q_5^n - Q_4^n P_5^n)}{\Delta^n}$$

$$\gamma_4^n = \frac{S_1^n\ (R_3^n Q_5^n - Q_3^n R_5^n) + S_2^n\ (P_3^n R_5^n - R_3^n P_5^n) + S_3^n\ (Q_3^n P_5^n - P_3^n Q_5^n)}{\Delta^n}$$

$$\gamma_5^n = \frac{S_1^n (Q_3^n R_4^n - R_3^n Q_4^n) + S_2^n (R_3^n P_4^n - P_3^n R_4^n) + S_3^n (P_3^r Q_4^n - Q_3^n P_4^n)}{\Delta^n}$$

avec

$$\Delta^n = P_3^n Q_4^n R_5^n + Q_3^n R_4^n P_5^n + R_3^n P_4^n Q_5^n - R_3^r Q_4^n P_5^n - Q_3^n P_4^n R_5^n - P_3^n R_4^n Q_5^n$$

Les coefficients de départ $\gamma_1^o$ $\gamma_2^o$ et $\gamma_3^o$ sont obtenus par les trois formules ci-dessus dans lesquelles on fait n = o et où on diminue l'indice du bas de $\gamma$, P, Q et R de 2 unités.

Par ailleurs, on prend $\gamma_4^o$ et $\gamma_5^o$ égaux à 0.

Enfin $\gamma_0^o$ est pris égal à

$$\frac{\Delta \phi''(o)}{\sum_i \beta_i \omega_i^\bullet}$$

Le couple résistant

$$\sum_k \gamma_k^n v^k$$

peut être utilisé dans un dispositif de surveillance tel que décrit dans l'article précité «Torsional monitor equipment for turbo-generator units» ou dans le document FR-A 2 326 745. On peut également utiliser des moyens de détermination 30 des valeurs des contraintes tels que décrits à la figure 4.

Les moyens 30 utilisent les résultats de la division 27' ainsi qu'un certain nombre de grandeurs élaborées par la division 27.

Les moyens 30 comportent une première division 31 qui comporte des synthétiseurs de fonction $Sy_1$ et $S_{y2}^k$.

Le synthétiseur $Sy_1$ fournit les fonctions $a_{i1}$ (v) et $a_{i2}$ (v).

Les fonctions $a_{i1}$ (v) et $a_{i2}$ ont les mêmes expressions que $a_{i1}^u$ et $a_{i2}^u$ dans lesquelles on remplace u par v, v représent le temps avec

$$0 \leqslant v \leqslant u$$

Les synthétiseurs $Sy_2$ fournissent les 10 w fonctions $N_i^k$ (v) et $0_i^k$ (v) qui ont même expression que $N_i^k$ et $0_i^k$ dans lesquels on a remplacé u par v avec

$$0 \leqslant v \leqslant u$$

Ces fonctions sont indépendantes de l'indice n.

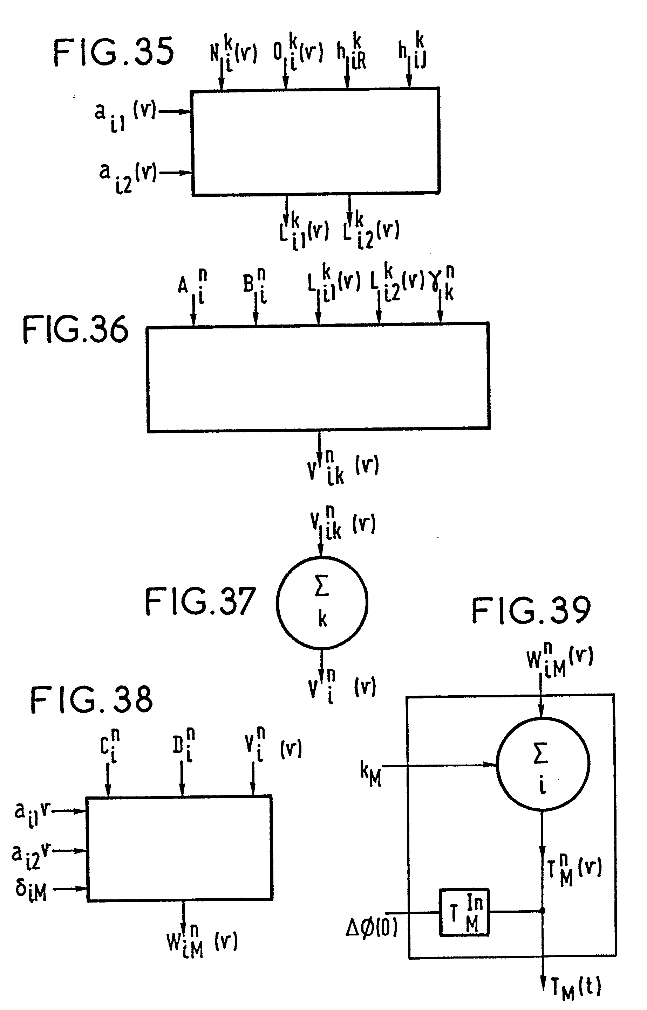

Les moyens 30 comportent une seconde division 32 comprenant un bloc (figure 35) qui élabore les fonctions $L_{i1}^k$ (v) et $L_{i2}^k$ (v) avec

$$L_{i1}^k (v) = 0_i^k (v) h_{iJ}^k a_{i2} (v) + h_{iR}^k a_{i1} (v)$$

et

$$L_{i2}^k (v) = N_i^k (v) - h_{iJ}^k a_{i1} (v) + h_{iR}^k a_{i2} (v)$$

Cette seconde division 32 comporte également un bloc générant les fonctions $V_{ik}^n$ (v) (figure 36) avec

$$V_{ik}^n (v) = \gamma_{ik}^n [B_i^n L_{i1}^k (v) + A_i^n L_{i1}^k (v)]$$

ainsi qu'un bloc (figure 37) effectuant la somme des 6 $V_{ik}^n$ (v) et founissant

$$V_1^n (v) = \sum_k V_{1k}^n (v)$$

La division 32 comporte un bloc (figure 38) fournissant la fonction

$$W_{1M}^n (v) = \left[ V_1^n (v) + a_{11} (v) C_1^n + a_{12} (v) D_1^n \right] \delta_{1M}$$

$$\text{avec } \delta_{1M} = \frac{\beta_1}{\Delta \phi_1} \left( \frac{d \phi_1}{d z} \right)_M$$

Cette fonction $W_{iM}^n$ (v) est la contribution de la forme propre i à la contrainte de torsion au point M.

Les moyens 30 comportent une troisième division 33 qui détermine la contrainte de torsion à chaque point M.

Elle comporte un bloc (figure 39) fournissant la fonction

$$T_M^n (v) = K_M \sum_1 W_1^n (v)$$

avec $K_M = \frac{1}{2} D_M G_M k_M$

$D_M$ étant le diamètre du rotor au point M
$G_M$ = étant le module de cisaillement
$k_M$ étant le coefficient de concentration en M.

Par ailleurs, le bloc (figure 39) reçoit le signal $\Delta\varnothing(0)$ et détermine $T_M^{In} = J_M \Delta\varnothing(0)$, $J_M$ étant un coefficient dépendant du point M, l'indice In signifiant existant avec l'instant 0.

On obtient à la sortie de ce bloc le signal $T_M(t) = T_M^{In} + T_M^{n}(v)$ n prenant toutes les valeurs de 1 à ∞ qui représente l'évolution des contraintes dans la zone M en fonction du temps.

Sur la figure 5, on a représenté les moyens 34 permettant de déterminer à partir de l'évolution des contraintes $T_M(t)$ dans la zone M l'endommagement du métal dans ces zones.

La sixièmes division 34 sert à calculer en chaque point M le dommage provoqué par l'évolution transitoire de $T_M(t)$.

Elle comporte un convertisseur 35 analogique digital qui transforme le signal analogique $T_M(t)$ en un signal digital.

Le signal digital alimente un bloc 36 qui détermine la suite des maxima et des minima relatifs permettant ainsi de repérer une suite de demi cycles caractérisés par leur valeur moyenne $T_{pM}$ et leur amplitude $A_p$.

Ces deux grandeurs sont comparées avec des valeurs comprises dans un tableau 37 fournissant une grandeur représentative du dommage correspondant à chaque demi-alternance.

Ces dommages sont sommés dans un sommateur 38 pour toute la période de temps correspondant à la durée du transitoire de torsion apparue à l'instant t = 0.

Ce dommage global $d_{MJ}$ est envoyé dans un sommateur 39 qui suit l'accumulation du dommage au point M au cours de la vie de la machine et fournit une grandeur $d_M$ représentative de ce dommage.

Cette division comprend également un organe à seuil 40 qui déclenche le groupe turbine-alternateur quand la fonction $T_M(t)$ atteint une valeur définie à l'avance.

**Revendication**

Système de surveillance de l'endommagement en torsion d'une ligne d'arbres composée d'une machine entraînante (2) et une machine entraînée (1), ladite machine entraînante (2) étant commandée par un servomoteur (7) dont la course règle l'alimentation de la machine entraînante (2) ledit système comprenant un premier et un second dispositif (8, 9) fournissant des signaux $V_H$ et $V_J$ représentatifs des vitesses de rotation en deux points éloignées H et J de la ligne d'arbres, un troisième dispositif déterminant les paramètres du couple résistant, des moyens (30) utilisant les signaux fournis par les premier, second et troisième dispositifs pour déterminer les valeurs de contraintes en diverses zones M de la ligne d'arbres, des moyens (34) permettant de déterminer à partir desdites valeurs de contraintes l'endommagement du métal dans lesdites zones M, caractérisé en ce que le troisième dispositif déterminant les paramètres du couple résistant comporte:

- des premiers moyens (10) fournissant à partir des signaux $V_H$ et $V_J$ un signal $\Delta\varnothing_T(t)$ représentatif de l'angle de torsion entre les points H et J,
- des deuxièmes moyens (11) alimentés par le signal $\Delta\varnothing_T(t)$ et par un signal

$$\frac{dL(t)}{dt}$$

qui est la dérivée d'un signal L (t) proportionnel à la course de servomoteur (7) et fournissant un signal représentatif de la partie de l'angle de torsion $\Delta\varnothing_m(t)$ due au couple moteur,
- des troisièmes moyens (12) servant à faire la différence entre le signal $\Delta\varnothing_T(t)$ et le signal $\Delta\varnothing_m(t)$ pour fournir un signal $\Delta\varnothing(t)$ représentatif de la partie de l'angle de torsion due au couple résistant,
- des quatrièmes moyens (13) fournissant à partir du signal $\Delta\varnothing(t)$ les paramètres du couple résistant,
- un premier dispositif à seuil (14) alimenté par le signal

$$\frac{d\Delta\varnothing^T(t)}{dt}$$

qui déclenche les deuxièmes moyens (11) lorsque ce signal dépasse un seuil déterminé,
- un second dispositif à seuil (16) alimenté par le signal

$$\frac{dL(t)}{dt}$$

qui déclenche les deuxièmes moyens (11) lorsque ce signal dépasse un seuil déterminé.

**Patentanspruch**

System zur Überwachung einer Welle, die sich zwischen einer treibenden (2) und einer angetriebenen Maschine (1) befindet, auf Torsionsschäden, wobei die treibende Maschine (2) von einem Servomotor (7) gesteuert wird, dessen Verstellweg die Speiseleistung der treibenden Maschine (2) regelt, und wobei das System

- eine erste und einen zweite Vorrichtung (8, 9), die für die Drehgeschwindigkeit der Welle an zwei weit voneinander entfernten Punkten H und J der Welle charakteristische Signale $V_H$ bzw. $V_J$ liefert,
- eine dritte Vorrichtung, die die Parameter des Widerstandsmoments bestimmt,
- Mittel (30), die die von der ersten, der zweiten und der dritten Vorrichtung gelieferten Signale auswerten, um die Belastungswerte in verschiedenen Zonen M der Welle zu bestimmen,
- und Mittel (34) aufweist, durch die ausgehend von diesen Belastungswerten die Beschädigung des Metalls in diesen Zonen M bestimmt werden kann, dadurch gekennzeichnet, dass die dritte Vorrichtung, die die Parameter des Widerstandsmoments ermittelt, aufweist:

- erste Mittel (10), die ausgehend von den Signalen $V_H$ und $V_J$ ein Signal $\Delta\varnothing_T(t)$ liefern, das für den Torsionswinkel zwischen den Punkten H und J charakteristisch ist,
- zweite Mittel (11), die mit dem Signal $\Delta\varnothing_T(t)$ und einem Signal

$$dL(t)/dt$$

gespeist werden, das die Ableitung eines zum Verstellweg des Servomotors (7) proportionalen Signals L(t) darstellt, und ein für den vom Motordrehmoment herrührenden Teil des Torsionswinkels $\Delta\varnothing_m(t)$ repräsentatives Signal liefern,
- dritte Mittel (12), die die Differenz zwischen dem Signal $\Delta\varnothing_T(t)$ und dem Signal $\Delta\varnothing_m(t)$ bilden, um ein für den Teil des Torsionswinkels, der auf dem Widerstandsmoment beruht, repräsentatives Signal $\Delta\varnothing(t)$ zu liefern,
- vierte Mittel (13), die ausgehend vom Signal $\Delta\varnothing(t)$ die Parameter des Widerstandsmoments liefern,
- eine erste Schwellenvorrichtung (14), die mit dem Signal

$$d(\Delta\varnothing_T(t))/dt$$

beaufschlagt wird und die zweiten Mittel (11) auslöst, wenn dieses Signal eine vorgegebene Schwelle überschreitet,
- und eine zweite Schwellenvorrichtung (16), die das Signal

$$dL(t)/dt$$

empfängt und die zweiten Mittel (11) auslöst, wenn dieses Signal eine vorgegebene Schwelle überschreitet.

**Claim**

A system for monitoring a shaft line concerning torsion damages, said line being composed of a driving machine (2) and of a driven machine (1), said driving machine (2) being controlled by a servomotor (7), the course of which adjusts the power supply to the driving machine (2), said system comprising

- a first and a second device (8, 9) supplying signals $V_H$ and $V_J$ representative of the speeds of rotation of two widely spaced points H and J of the line of shafts,
- a third device determining the parameters of the opposing torque,
- means (30) using the signals provided by the first, second and third devices to determine the stress values in various zones M of the line of shafts,
- and means (34) conceived to determine, in response to said stress values, the metall damage in said zones M, characterized in that the third device determining the parameters of the opposing torque comprise:
- first means (10) supplying, in response to the signals $V_H$ and $V_J$ a signal $\Delta\varnothing_T(t)$ representative of the angle of twist between the points H and J,
- second means (11) supplied with the signal $\Delta\varnothing_T(t)$ and with a signal

$$dL(t)/dt$$

which is the derivative of a signal L(t) proportional to the course of the servomotor (7), to provide a signal which is representative of the portion of the angle of twist $\Delta\varnothing_m(t)$ which is due to the motor torque,
- third means (12) serving to establish the difference between the signal $\Delta\varnothing_T(t)$ and the signal $\Delta\varnothing_m(t)$ to provide a signal $\Delta\varnothing(t)$ which representative of that part of the angle of twist which is due to the opposing torque,
- fourth means (13) supplying the parameters of the opposing torque in response to the signal $\Delta\varnothing(t)$,
- a first threshold device (14) supplied with the signal

$$d(\Delta\varnothing_T(t))/dt$$

which triggers the second means (11) whenever this signal exceeds a given threshold,
- a second threshold device (16) supplied with the signal

$$dL(t)/dt$$

which triggers the second means (11) whenever this signal exceeds a given threshold.

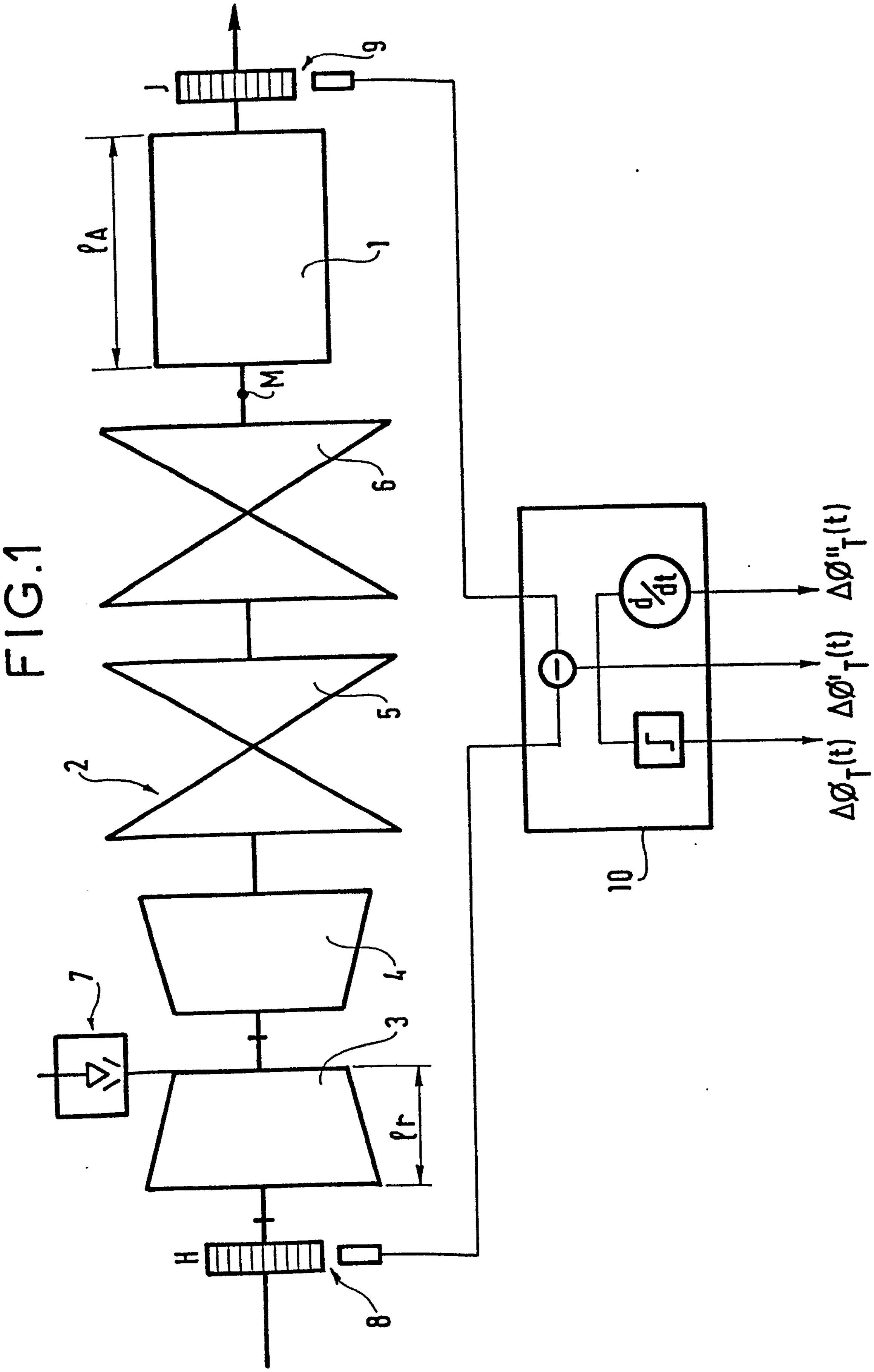
1
2
3
4
5
6
7
8
9
10
H
J
M
$\ell_A$
$\ell_r$
d/dt
$\Delta\emptyset_T(t)$
$\Delta\emptyset'_T(t)$
$\Delta\emptyset''_T(t)$

FIG.1

FIG. 2

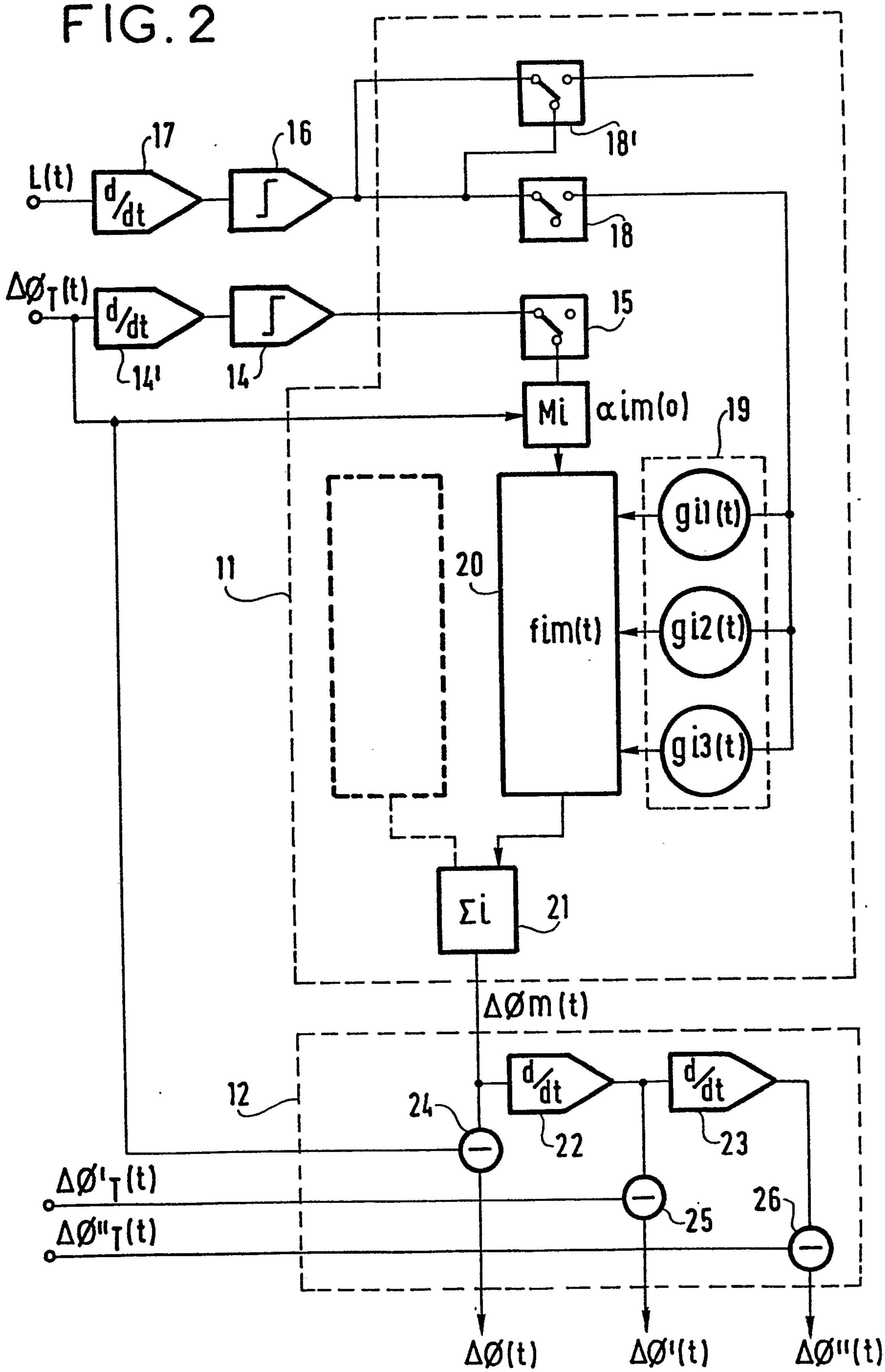

L(t)
17
16
18'
18
ΔØT(t)
d/dt
∫
15
14'
14
Mi
αim(o)
19
gi1(t)
gi2(t)
gi3(t)
11
20
fim(t)
Σi
21
ΔØm(t)
12
24
22
23
ΔØ'T(t)
ΔØ''T(t)
25
26
ΔØ(t)
ΔØ'(t)
ΔØ''(t)

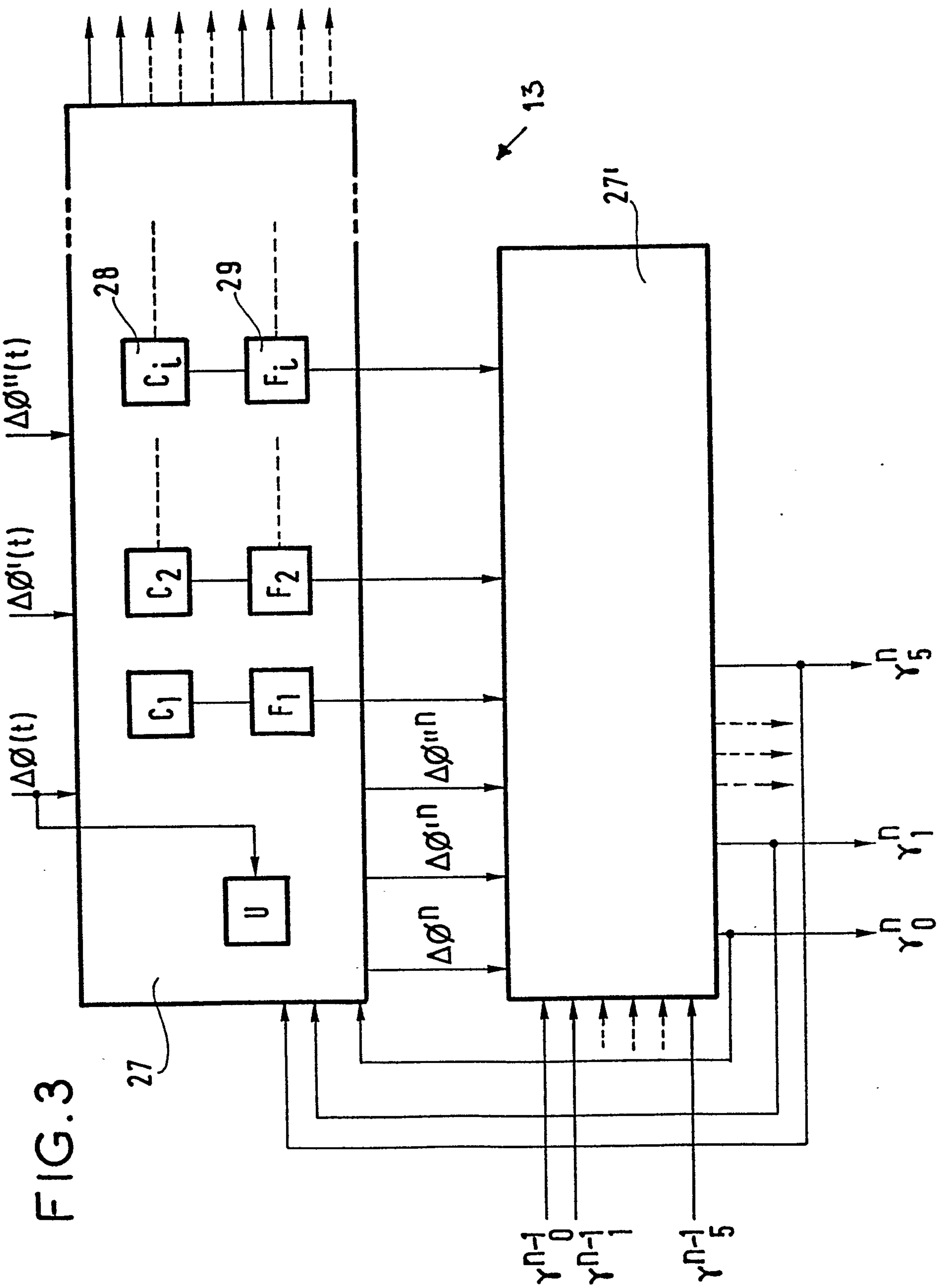

ΔØ(t)
ΔØ'(t)
ΔØ''(t)
$C_1$
$C_2$
$C_i$
$F_1$
$F_2$
$F_i$
U
28
29
27
27'
13
$ΔØ^n$
$ΔØ'^n$
$ΔØ''^n$
$Y_0^n$
$Y_1^n$
$Y_5^n$
$Y_0^{n-1}$
$Y_1^{n-1}$
$Y_5^{n-1}$


FIG. 3

FIG. 4

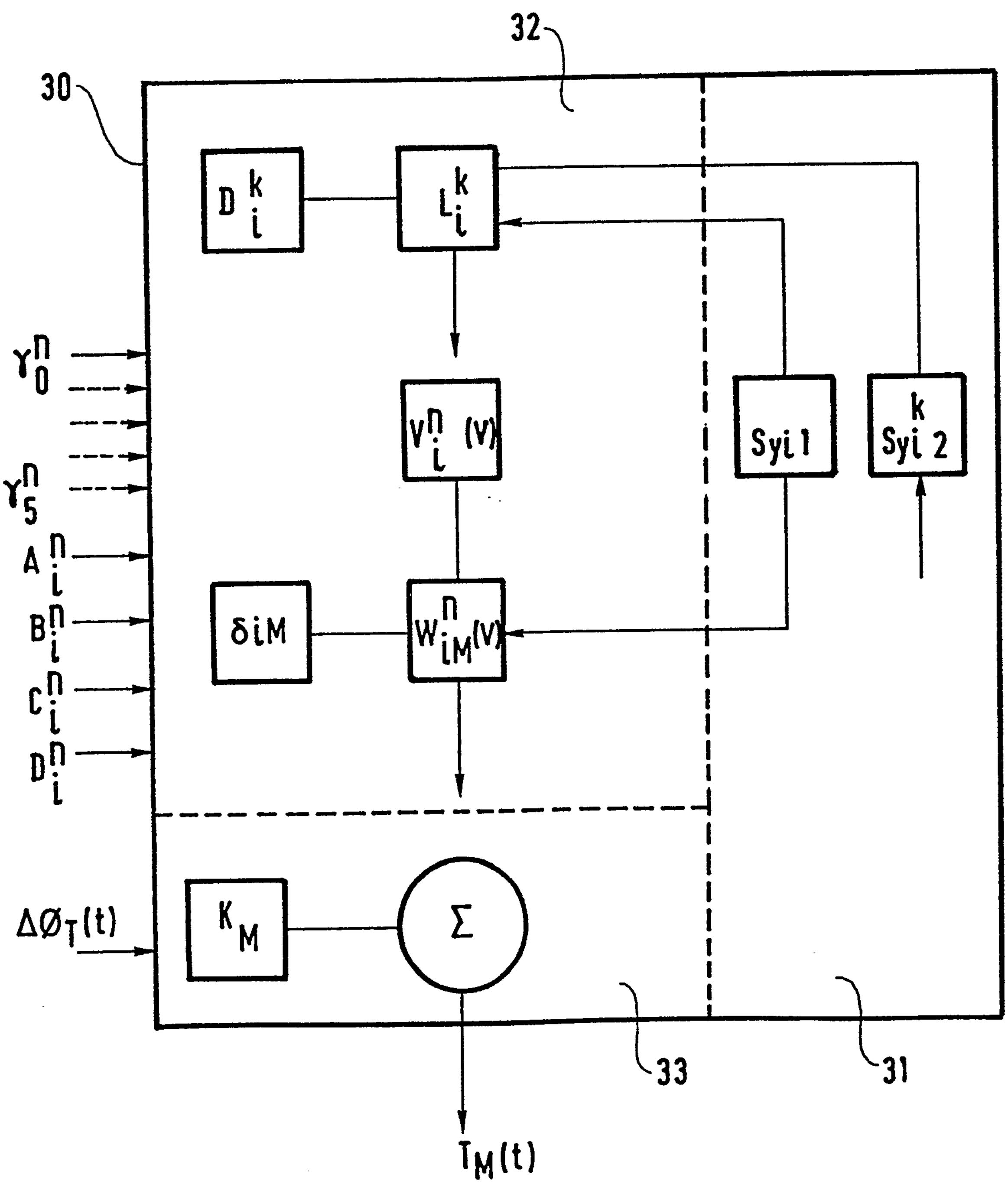
32
30
D $^{k}_{i}$
$L^{k}_{i}$
$\gamma^{n}_{0}$
$\gamma^{n}_{5}$
$V^{n}_{i}$ (v)
Syi 1
$Syi^{k}$ 2
$A^{n}_{i}$
$B^{n}_{i}$
$C^{n}_{i}$
$D^{n}_{i}$
δiM
$W^{n}_{iM}$(v)
$\Delta Ø_T(t)$
$K_M$
Σ
33
31
$T_M(t)$

FIG. 5

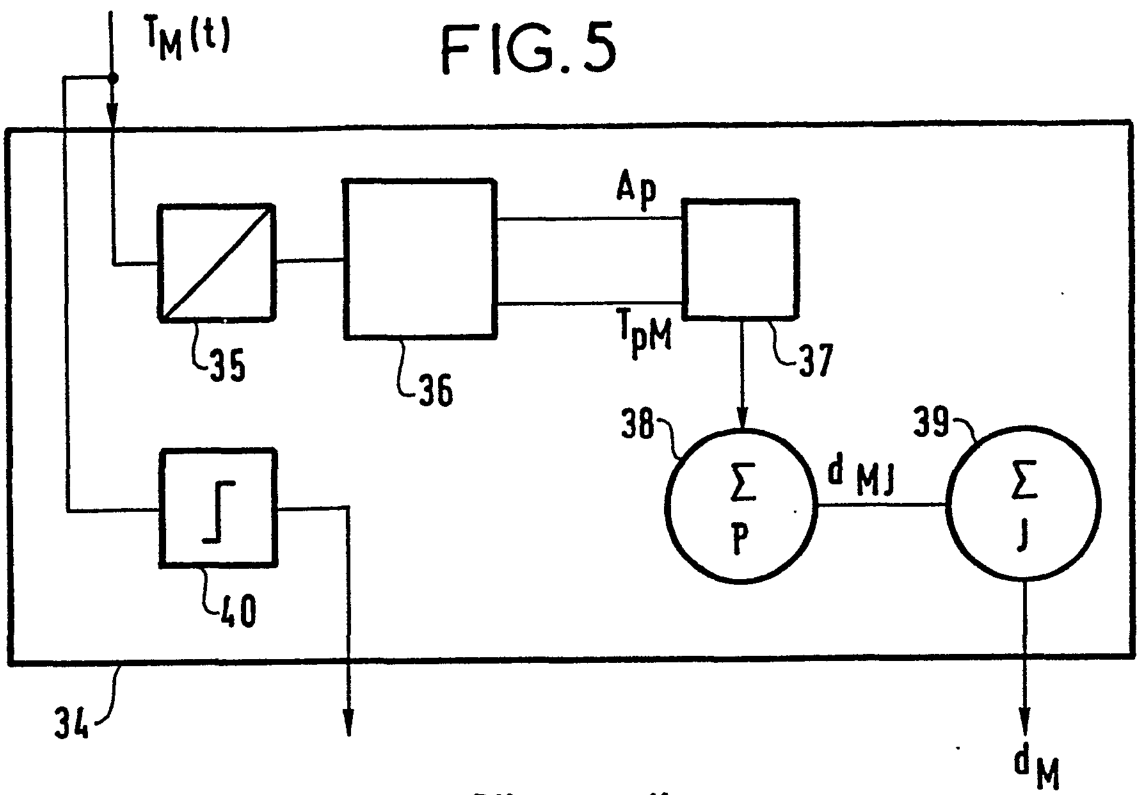


FIG. 6

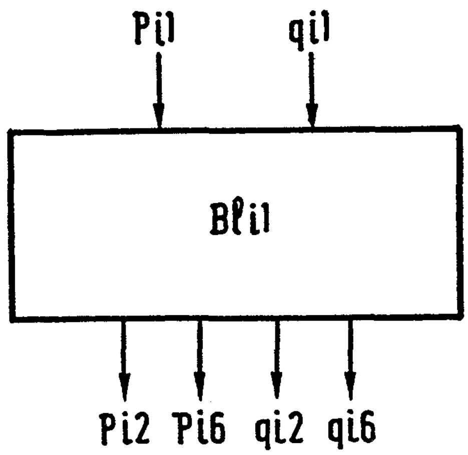


FIG. 7

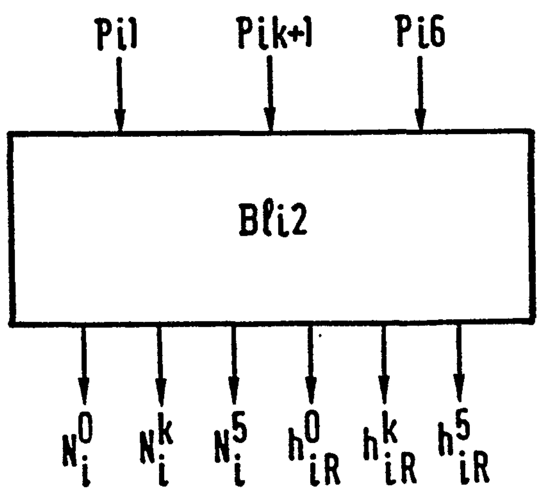

FIG.8

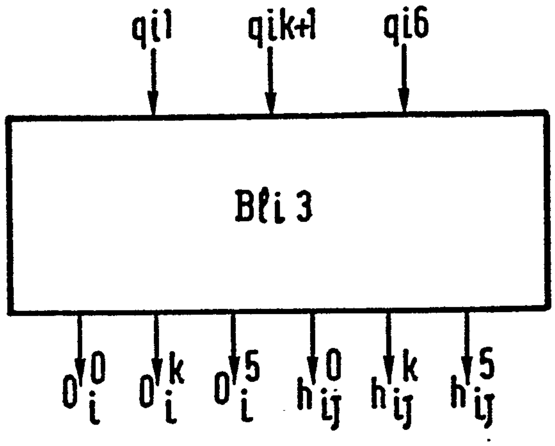


FIG.9

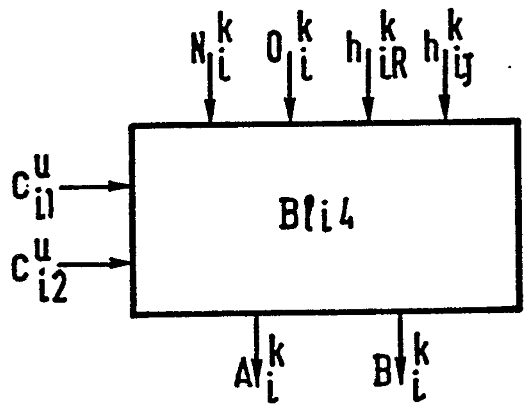


FIG.10

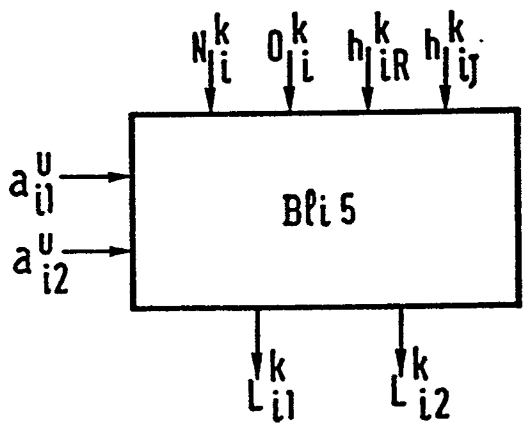


FIG.11

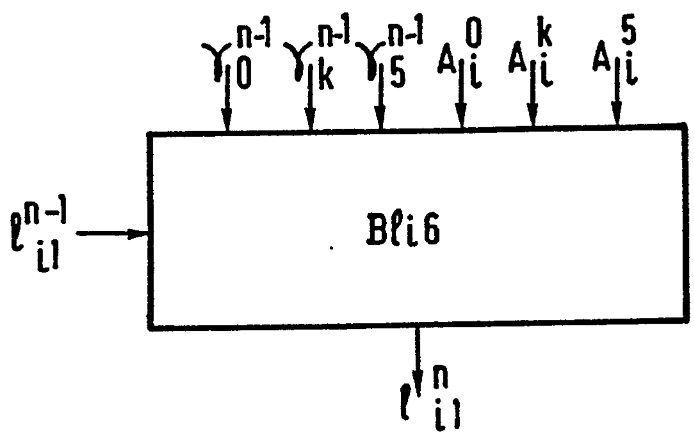

FIG.12

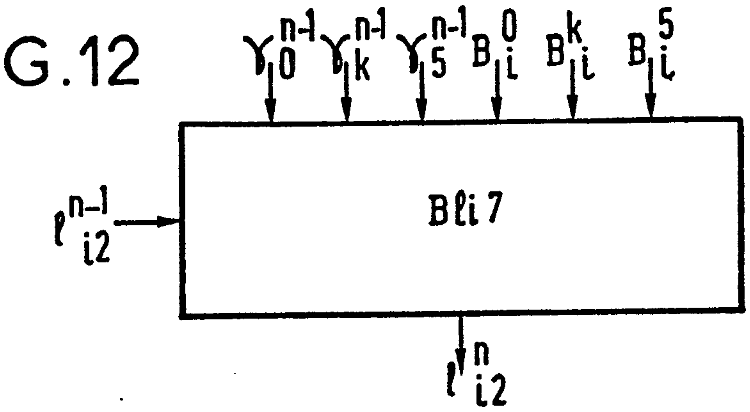


FIG.13

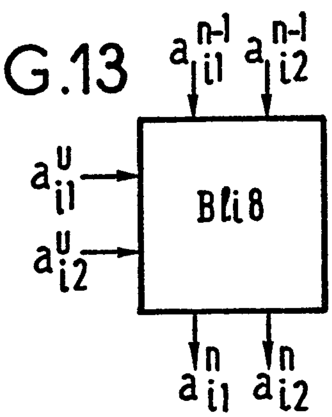


FIG.14

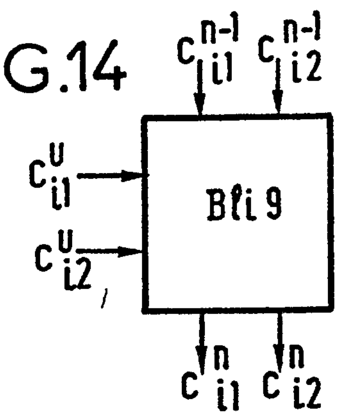


FIG.15

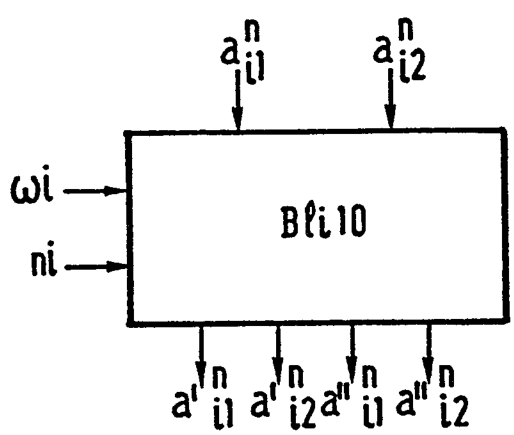


FIG.16

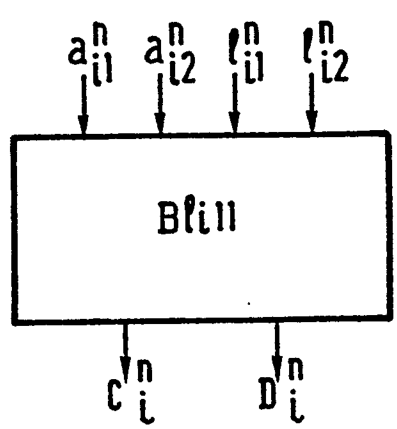

FIG.17

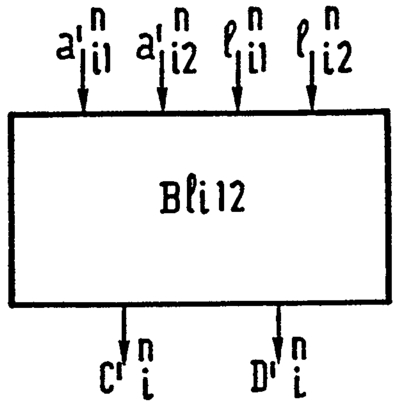


FIG.18

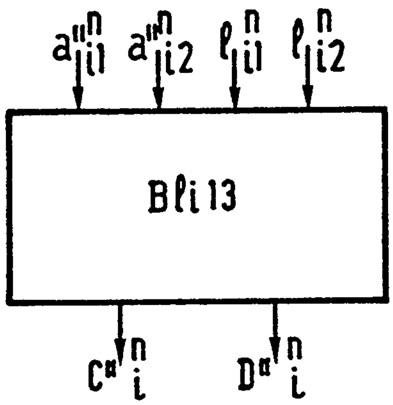


FIG.19

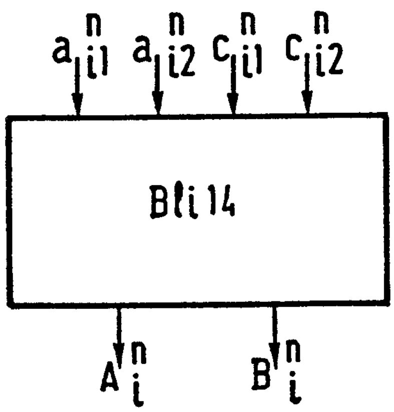


FIG. 20

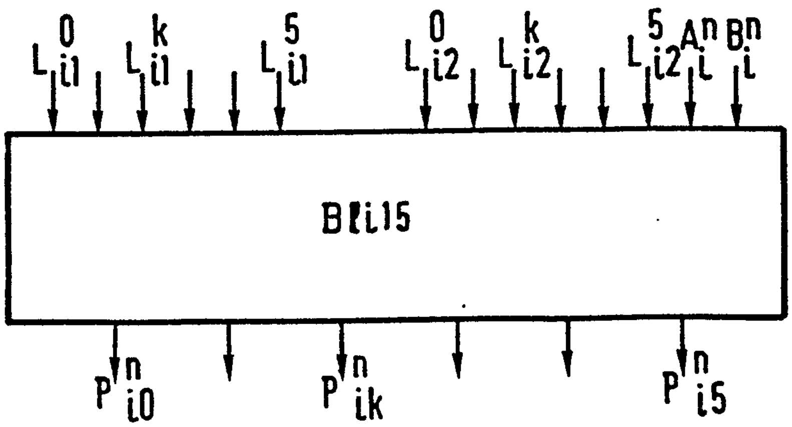

# FIG. 21

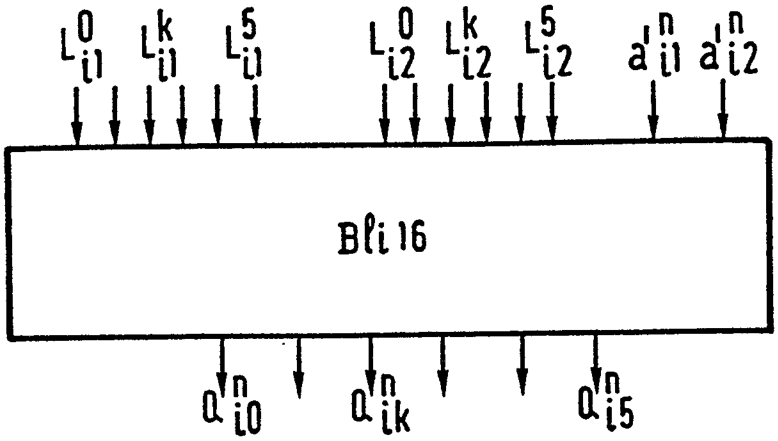


# FIG. 22

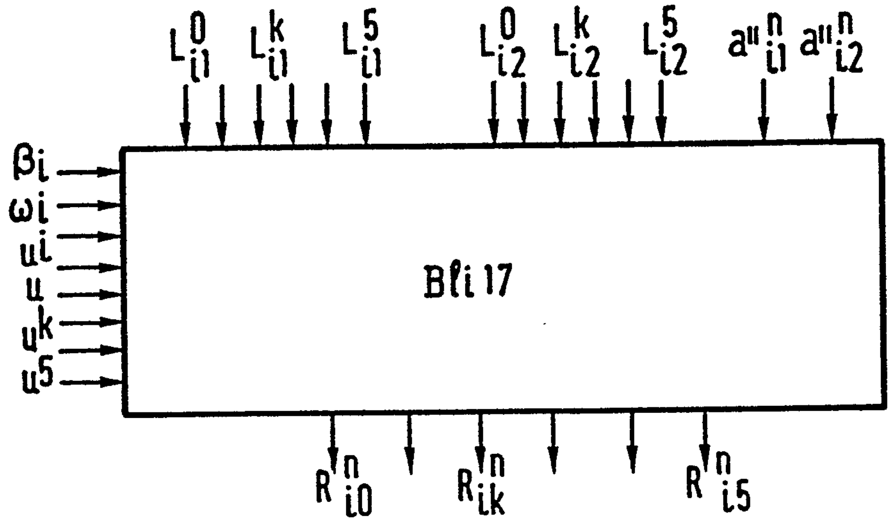


# FIG. 23

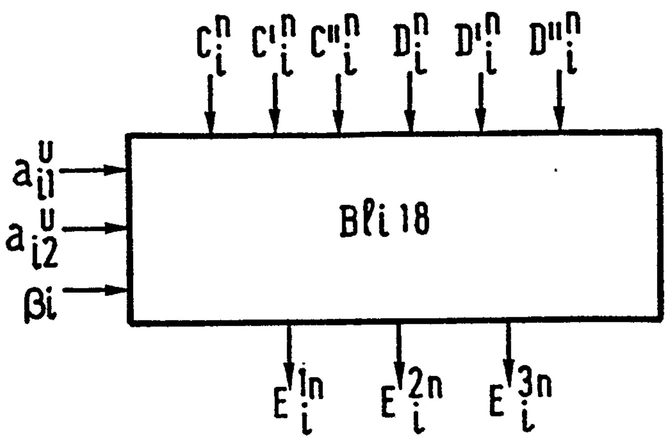

FIG. 24

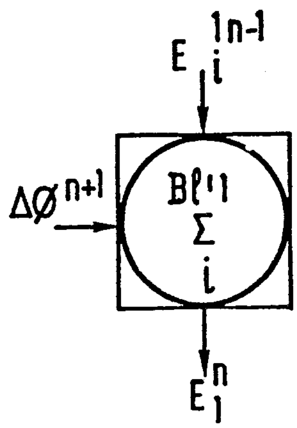


FIG. 25

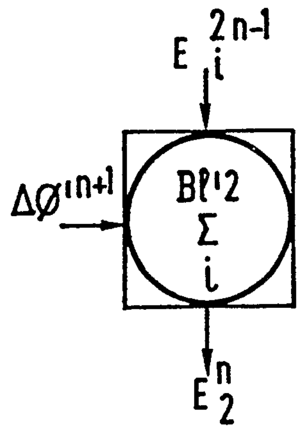


FIG. 26

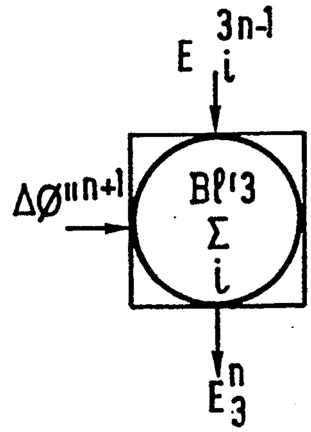


FIG. 27

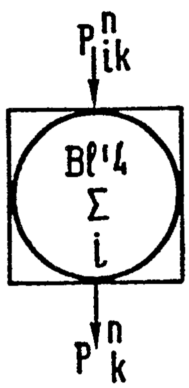


FIG. 28

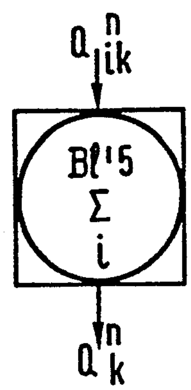


FIG. 29

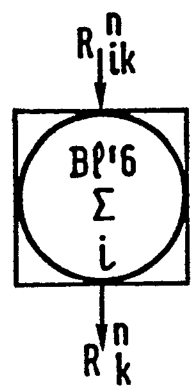


FIG. 30

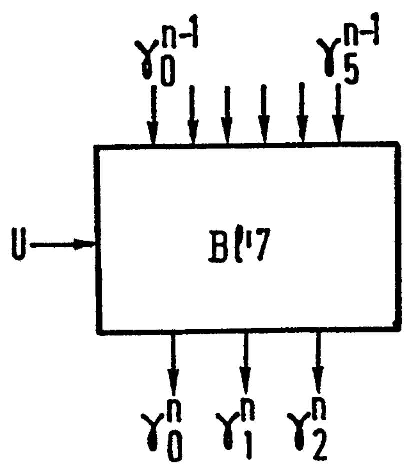

FIG.31

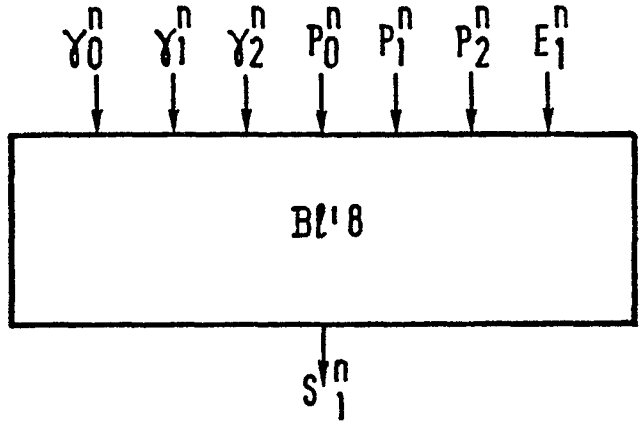


FIG.32

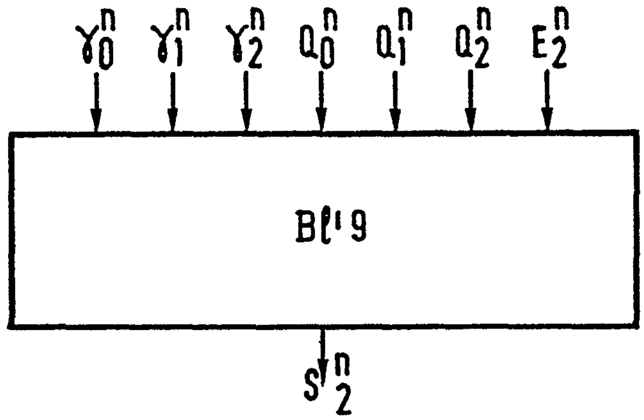


FIG.33

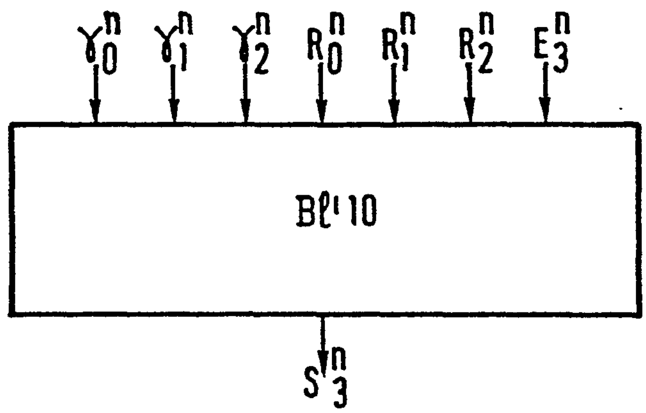


FIG.34

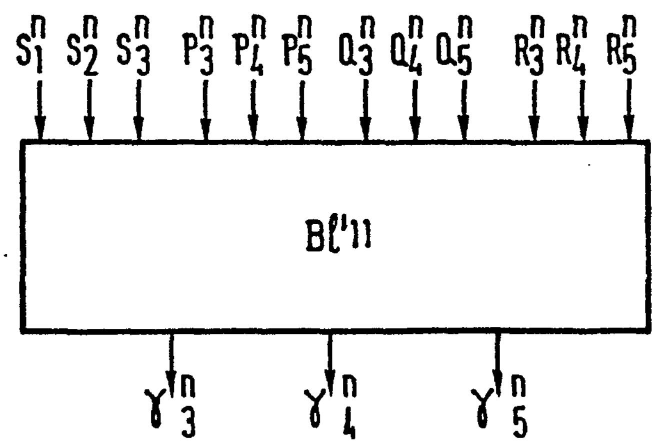

FIG.35

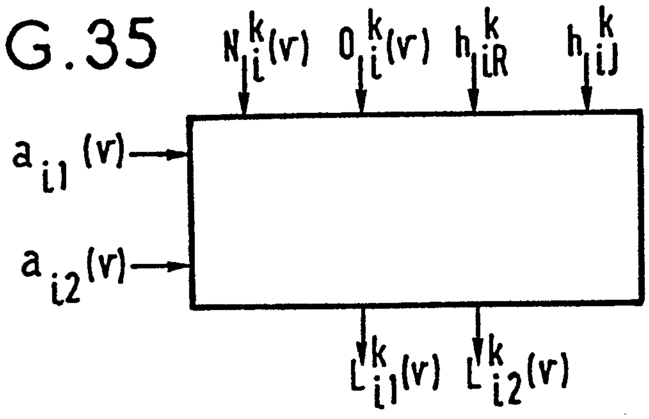


FIG.36

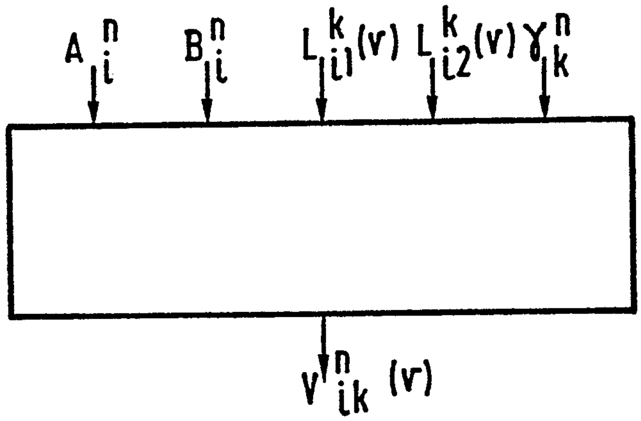


FIG.37

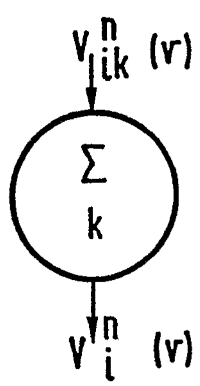


FIG.39

FIG.38